# FASCICULE DE BREVET EUROPEEN

(11) **EP 2 435 493 B1**
(45) Date de publication et mention de la délivrance du brevet: **06.01.2016**
(21) Numéro de dépôt: 10731772.9
(22) Date de dépôt: 27.05.2010
(51) Int. Cl.: C08G 59/02, C08G 59/17, C08G 59/42, C08G 59/50, C08L 63/00, C08G 59/06

(54) **NOUVEAU PROCÉDÉ D'ÉLABORATION DE RÉSINES THERMODURCISSABLES EPOXY**
NEUES VERFAHREN ZUR HERSTELLUNG VON WÄRMEHÄRTENDEN EPOXIDHARZEN
NOVEL METHOD FOR PRODUCING THERMOSETTING EPOXY RESINS

(30) Priorité: 27.05.2009 FR 0902589
(43) Date de publication de la demande: 04.04.2012
(73) Titulaire: Centre National de la Recherche Scientifique (CNRS), 75016 Paris (FR); Ecole Nationale Supérieure de Chimie de Montpellier, 34296 Montpellier Cedex 5 (FR)
(72) Inventeur: BOUTEVIN, Bernard, F-34090 Montpellier (FR); CAILLOL, Sylvain, F-34090 Montpellier (FR); BURGUIERE, Carine, F-34160 Castries (FR); RAPIOR, Sylvie, F-34090 Montpellier (FR); FULCRAND, Hélène, F-34980 Saint Gely Du Fesc (FR); NOUAILHAS, Hélène, F-34000 Montpellier (FR)
(74) Mandataire: Jacobson, Claude
(86) Numéro de dépôt international: PCT/FR2010/051018
(87) Numéro de publication internationale: WO 2010/136725

(56) Documents cités:
- EP-A2- 0 161 576
- EP-A2- 0 739 877
- US-A- 3 984 363
- US-A- 4 540 802
- DATABASE WPI Week 199134 Thomson Scientific, London, GB; AN 1991-248667 XP002563552 & JP 3 161411 A (LION CORP) 11 juillet 1991 (1991-07-11)
- OYANGUREN P A ET AL: "Analysis of the epoxidation of bisphenol A and phenolic Novolacs with epichlorohydrin" POLYMER, ELSEVIER SCIENCE PUBLISHERS B.V, GB, vol. 33, no. 11, 1 janvier 1992 (1992-01-01), pages 2376-2381, XP024119098 ISSN: 0032-3861 [extrait le 1992-01-01]
- HAJIME KISHI ET AL: "Synthesis of wood-based epoxy resins and their mechanical and adhesive properties", JOURNAL OF APPLIED POLYMER SCIENCE, vol. 102, no. 3, 1 January 2006 (2006-01-01), pages 2285-2292, XP055123295, ISSN: 0021-8995, DOI: 10.1002/app.24433
- E. ROFFAEL ET AL: "Use of spruce tannin as a binder in particleboards and medium density fiberboards (MDF)", HOLZ ALS ROH- UND WERKSTOFF, [Online] vol. 58, no. 5, 8 December 2000 (2000-12-08), XP055123288, ISSN: 0018-3768, DOI: 10.1007/s001070050432 Frauenhofer-Gesellschaft - Veröffentlichungsdatenbak Fraunhofer-Publica Retrieved from the Internet: URL:http://publica.fraunhofer.de/dokumente /N-5225.html> [retrieved on 2014-06-13]

## Description

Le domaine de la présente invention est celui de la synthèse de prépolymères époxy, notamment de type éthers de glycidyle et de leur utilisation pour l'élaboration de résines époxy. La présente invention concerne plus particulièrement l'utilisation de composés aromatiques et polyaromatiques polyfonctionnels issus de ressources renouvelables, et non dérivés du pétrole, du gaz naturel, du charbon ou d'autres ressources fossiles, comme réactifs pour la synthèse d'éthers de glycidyle et leur utilisation pour l'élaboration de résines et plus spécialement de type époxy thermodurcissables.

Dans le cadre de la présente description, on entend par « prépolymère époxy » un composé ou un mélange de composés comportant une ou plusieurs fonctions époxydes. Ces prépolymères sont typiquement des éthers de glycidyle, portant des fonctions époxydes terminales.

Les prépolymères époxy sont généralement mis en réaction par formulation avec des durcisseurs ou des monomères pour former des résines dites « résines de type époxy » ou « résines époxy ».

Des résines de type époxy particulières sont les « résines thermodurcissables de type époxy » ou « résines thermodurcissables époxy » qui sont un mélange de prépolymères époxy et d'un durcisseur.

Un autre type de résine de type époxy est une « résine vinyl ester » qui est obtenue par la réaction d'un mélange de prépolymères époxy avec l'acide acrylique ou méthacrylique pour obtenir un macromonomère acrylate ou méthacrylate puis par la polymérisation de ce macromonomère avec des monomères vinyliques.

Dans le cadre de l'invention, on entend par « époxyde » une fonction comportant un atome d'oxygène ponté sur une liaison carbone-carbone. Par extension, un composé comportant une fonction époxyde est également appelé époxyde ou « oxirane » ou encore « époxy ». On entend par « époxydation » une réaction visant à introduire une fonction époxyde dans un composé, par exemple par oxydation d'une oléfine ou par substitution nucléophile d'un oxirane halogéné. L'épichlorhydrine est ainsi généralement utilisée pour introduire des fonctions époxyde (plus précisément éther de glycidyle ou glycidyl éther) sur des composés phénoliques.

Dans le cadre de la présente description, on entend par « formulation » l'action de mélanger des prépolymères époxy avec un durcisseur. Ces deux composants réagissent entre eux, typiquement par polymérisation, pour former une résine époxy ou résine réticulée. On parle aussi de « réticulation ».

Dans la cadre de la présente description, on entend par « résine de type époxy » ou « résine époxy » le résultat de la formulation d'un mélange de prépolymères époxy avec un durcisseur.

La présente demande a pour objet un procédé de préparation de prépolymères époxy, de résines thermodurcissables époxy et de résines vinyl ester obtenues à partir de composés phénoliques naturels.

Elle a également pour objet les prépolymères époxy, les résines thermodurcissables époxy et les résines vinyl ester préparées par ledit procédé, ainsi que l'utilisation desdites résines.

L'époxydation de composés aromatiques et polyaromatiques polyfonctionnels a pour but de modifier leur réactivité lors de la formulation de résines époxy et ainsi de contrôler le temps de prise de la résine ou la pot-life. Ces composés aromatiques et polyaromatiques sont des composés phénoliques naturels issus de la biomasse et plus particulièrement extraits de végétaux, d'arbres, de vigne, de fruits ou d'algues.

Grâce à leur polyvalence, leur facilité d'utilisation et leurs propriétés physiques variées, les résines de type époxy sont utilisées dans de nombreuses matières plastiques, particulièrement dans le domaine des applications électroniques, comme l'isolation des transformateurs, des interrupteurs, des coupe-circuits. Les résines de type époxy possèdent également d'excellentes propriétés mécaniques et électriques, de stabilité en température et à la friction, de résistance aux produits chimiques et sont bien connues comme revêtements protecteurs sur des surfaces métalliques.

La première fonction des durcisseurs est de réagir avec les époxydes dans la formulation pour propager la réticulation de la résine. Les formulations de résines époxy peuvent également contenir des catalyseurs (accélérateurs) pour catalyser la réaction de réticulation, ainsi que des additifs, charges, plastifiants, diluants réactifs, stabilisants et autres ingrédients.

Les résines époxy sont constituées de deux composants qui réagissent entre eux pour former une résine réticulée aux remarquables propriétés mécaniques et thermiques. Cette réaction se produit entre un prépolymère qui est un composé portant des fonctions époxy (glycidyl) et un durcisseur. Le durcisseur est un composé portant des fonctions amine (primaire et éventuellement secondaire) ou portant des fonctions acide ou anhydride d'acide. Cette réaction a lieu à température ambiante ou à chaud et est exothermique (Schéma 1). Le durcissement peut également être obtenu par polymérisation radicalaire avec des monomères vinyliques après addition du prépolymère et d'acide acrylique ou méthacrylique. La réticulation est alors fondée sur la copolymérisation de monomères vinyliques et de macromonomères acrylates.

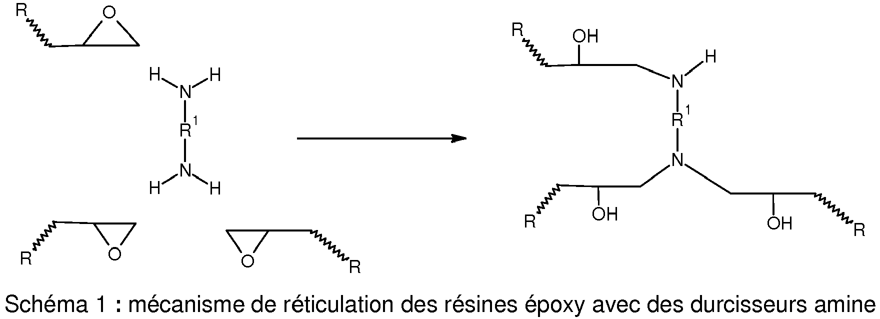

Les composés aux fonctions époxy ou prépolymères époxy sont généralement synthétisés à partir de bisphénol A et d'épichlorhydrine, ce sont des oligomères de DiGlycidylEther of Bisphenol A (DGEBA) (Schéma 2). Le bisphénol A, est un produit nocif, classé CMR Reprotoxique catégorie 3.

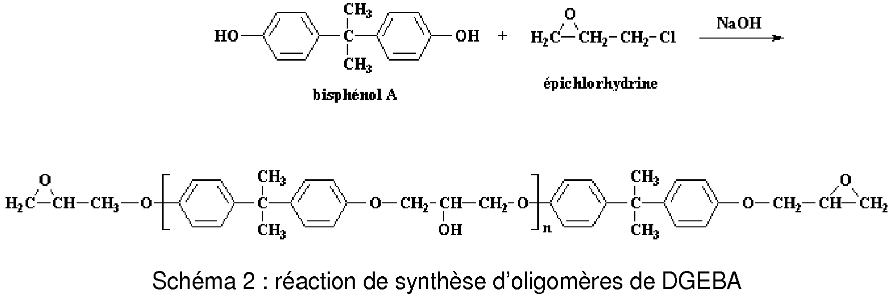

Les durcisseurs amine utilisés dans les résines époxy sont généralement constitués de composés portant des fonctions amine primaire et secondaire. Les fonctions amine réagissent avec les fonctions époxy au cours de la réticulation (Schéma 1). Les fonctions amine primaire sont plus réactives et l'élévation de température consécutive à l'exothermie de la réaction avec les fonctions époxy permet d'apporter l'énergie nécessaire à la réaction des fonctions amine secondaire.

Les diamines les plus utilisées sont la méthylènedianiline (MDA) et la diaminodiphénylsulfone (DDS) (Schéma 3, Schéma 4). Cependant, la DDS est un composé nocif et la DMA est classée CMR : cancérogène catégorie 2 et mutagène catégorie 3. Leurs utilisations sont donc très dangereuses et doivent être limitées, voire évitées.

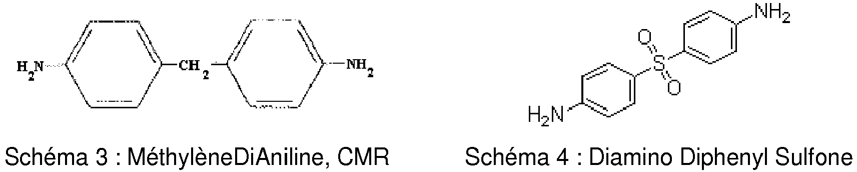

D'autres amines sont aussi utilisées dans les formulations de résines époxy telles que l'isophorone diamine et la N-aminoéthyl piperazine, mais ces amines sont nocives par contact et ingestion, sensibilisantes, toxiques pour l'environnement (Schéma 5, Schéma 6).

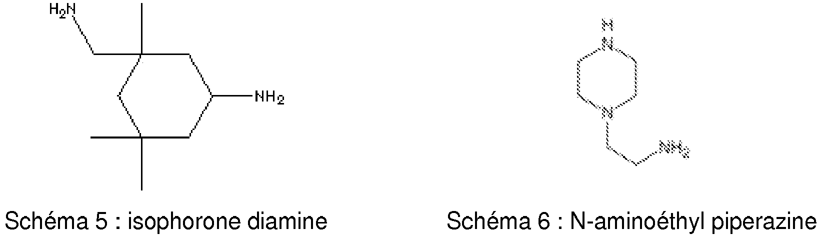

Les durcisseurs acide utilisés dans les résines époxy sont généralement constitués de composés portant des fonctions acide ou anhydride d'acide. Les fonctions hydroxy portées par les prépolymères époxy réagissent avec les fonctions anhydride qui libèrent un groupement acide susceptible de réagir avec un groupement glycidyl au cours de la réticulation (Schéma 7). Les fonctions anhydride sont moins réactives que les fonctions amine et il est nécessaire d'apporter suffisamment d'énergie thermique pour amorcer la réticulation.

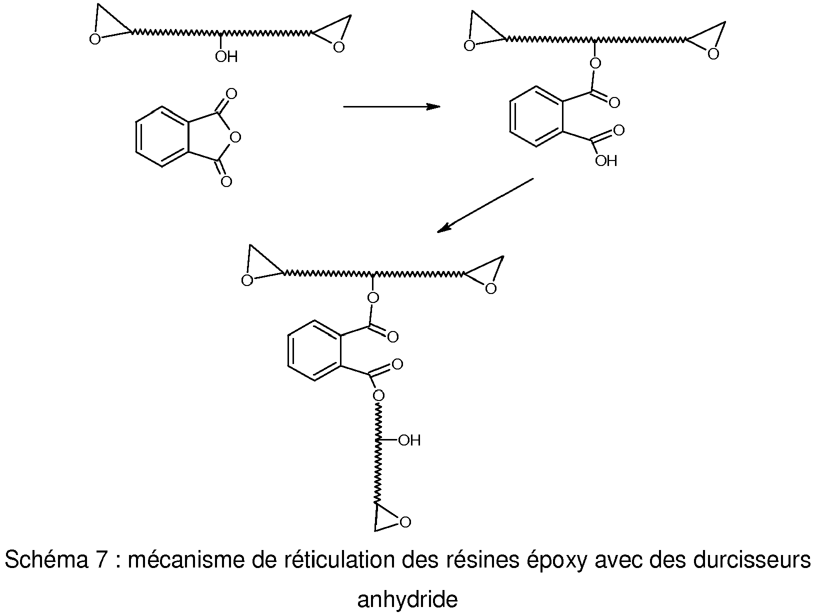

Les durcisseurs anhydride les plus utilisées sont l'anhydride phtalique et ses dérivés (Schéma 8, Schéma 9).

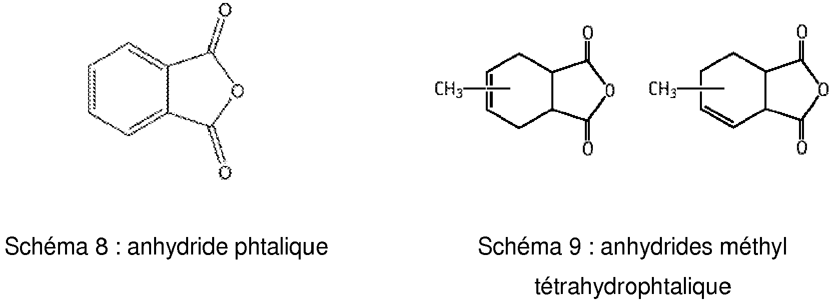

La préparation de résines vinyl ester est réalisée en deux temps. En premier lieu, les prépolymères époxy sont formés par réaction avec l'acide acrylique ou méthacrylique de façon à synthétiser un macromonomère acrylate ou méthacrylate. Ensuite, ce macromonomère est copolymérisé par polymérisation radicalaire avec des monomères vinyliques (styrène, vinyl toluène ou leurs dérivés) par polymérisation radicalaire, amorcée par un amorceur radicalaire, par voie thermique, photochimique ou radiative (Schéma 10).

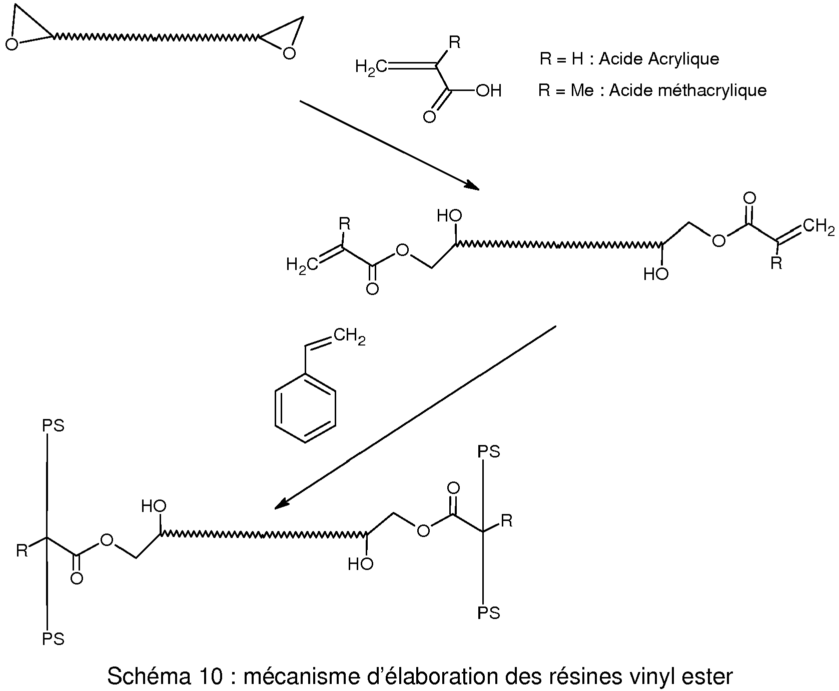

A l'heure actuelle, les industriels de la chimie doivent réagir face à plusieurs contraintes pour leurs activités :
- la raréfaction des matières premières fossiles accompagnée d'une volatilité des prix ;
- la nécessité d'une réduction drastique de la pollution des procédés chimiques et en particulier de la libération des gaz à effet de serre ;
- une pression réglementaire forte concernant les aspects toxicologiques des matières premières et Intermédiaires de synthèse avec la réglementation (REACH, DCEⁱ...).
ⁱ Directive 2005/32/CE

Face à ces contraintes, l'industrie chimique doit continuer à répondre aux attentes de la société avec des produits et des procédés alternatifs plus respectueux de l'homme et de son environnement, en particulier en élaborant des matériaux à partir de ressources renouvelables. Et orienter une chimie sur l'utilisation des ressources renouvelables c'est lui donner deux grandes missions : remplacer des ressources fossiles par des ressources renouvelables afin de limiter la contrainte qui pèse sur le pétrole et de réduire les émissions de carbone fossiles produites en raison de l'oxydation de ressources fossiles ; remplacer des substances toxiques, préoccupantes pour l'homme. C'est pourquoi il ne suffit pas de se contenter de substituer molécule à molécule (on conserve l'éventuelle toxicité) mais d'envisager également de substituer des propriétés obtenues d'un matériau par des propriétés identiques (voire améliorées) avec de nouveaux matériaux issus de ressources renouvelables.

Actuellement les grands enjeux liés à l'obtention de synthons issus de la biomasse sont de remplacer les résines industrielles et les composites. S'agissant du cahier des charges que l'on souhaite obtenir pour accéder à des résines thermodurcissables époxy, il est particulièrement exigeant et comprend, notamment, les spécifications suivantes :
1- La première spécification recherchée serait que les résines thermodurcissables soient des résines fondées sur des prépolymères époxy pour permettre une grande réactivité de la phase de réticulation.
2- La deuxième spécification recherchée serait que les résines thermodurcissables et les résines vinyl ester soient élaborées à partir de composés aromatiques ou polyaromatiques issus de ressources renouvelables et non dérivés du pétrole, du gaz naturel, du charbon ou d'autres ressources fossiles.
3- La troisième spécification recherchée serait que les réactions de fonctionnalisation et d'époxydation mettent en oeuvre des réactifs préférentiellement issus de ressources renouvelables et non dérivés du pétrole, du gaz naturel, du charbon ou d'autres ressources fossiles.
4- La quatrième spécification recherchée serait que les composés aromatiques et polyaromatiques époxydés puissent être mis en oeuvre dans des résines époxy et vinyl ester dans des conditions de processabilité convenables (température de fusion, viscosité, solubilité...)
5- La cinquième spécification recherchée serait que les composés aromatiques et polyaromatiques époxydés soit suffisamment réactifs pour mettre en oeuvre des réactions de réticulation dans des conditions acceptables (température, durée...)

Les propositions techniques antérieures, décrites infra, ont tenté de satisfaire à certains de ces enjeux. A titre d'illustration, on peut notamment citer les propositions antérieures suivantes :
(a) Le brevet US3984363 concerne l'estérification de lignines époxydées et l'utilisation de ces lignines estérifiées dans des compositions de résines thermodurcissables époxy comprenant également un agent réticulant, de type anhydride d'acide ou amine. Ce brevet concerne uniquement les lignines, composés phénoliques naturels complexes et très peu solubles. Afin de les rendre plus solubles, ces composés sont donc nécessairement transformés par une étape d'estérification avec des acides carboxyliques portant des chaînes grasses ayant de 1 à 20 atomes de carbone.
(b) L'art antérieur US4540802 divulgue une résine époxy obtenu par réaction de l'acide gallique ou tannique avec une épihalohydrine. L'acide gallique et l'acide tannique se trouvent en abondance dans la nature et sont aisément accessibles.
(c) Une résine époxy obtenue par époxidation de bois liquéfié, qui est d'un mélange complexe obtenu par la réaction de sciure d'épicéa avec le résorcinol, est décrite dans l'art antérieur (Kishi, H.; Fujita, A.; Miyazaki, H.; Matsuda, S.; Murakami, A.; Journal of Applied Polymer Science; 2006, 102, 2285-2292).
(d) Une synthèse du résorcinol diglycidyl éther (Schéma 11) à partir de résorcinol et d'épichlorohydrine est décrite dans le brevet US2892849. 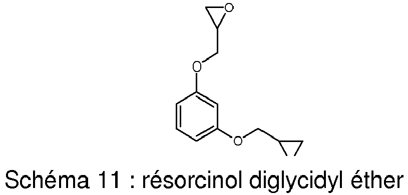
(e) Une synthèse du phloroglucinol triglycidyl éther (Schéma 12) à partir de phloroglucinol et d'épichlorohydrine ainsi que son activité antitumorale sont décrites dans l'abrégé de JP59210017.

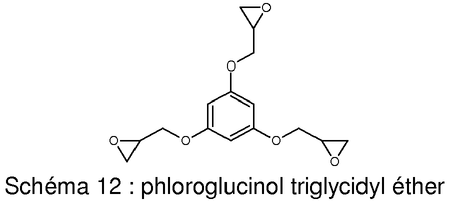

Un but de la présente invention est de pouvoir fournir de nouvelles solutions d'élaboration de résines thermodurcissables époxy issues de ressources renouvelables. Un autre objectif de la présente invention est de pouvoir fournir de nouvelles solutions d'élaboration de résines vinyl ester issues de ressources renouvelables.

Un autre objectif de la présente invention est d'obtenir de nouveaux composés aromatiques et polyaromatiques époxydés issus de ressources renouvelables, qui soient miscibles et formulables avec des durcisseurs amines dans des conditions usuelles de formulation et de réticulation, et qui permettent de préférence de contrôler la réticulation des résines époxy élaborées à partir de leur formulation.

Les objectifs relatifs au produit sont atteints par la présente invention qui fournissent une voie de synthèse de composés aromatiques ou polyaromatiques polyfonctionnels à partir de composés phénoliques naturels, notamment issus de la biomasse végétale, ou de produits connexes issus de la sylviculture, ou extraits des algues dulçaquicoles ou halophiles, ou extraits de la vigne, du raisin, des fruits ou de produits connexes issus de la viticulture ou de la vinification.

Un autre objectif de l'invention est de pouvoir fournir de nouveaux procédés d'élaboration de résines thermodurcissables époxy issues de ressources renouvelables, et en particulier de permettre de remplacer les composés phénoliques d'origine fossile par des composés phénoliques d'origine naturelle.

Un autre objectif de l'invention est de contrôler la réticulation des résines époxy élaborées selon les procédés susmentionnés.

Plus précisément, l'invention a pour objet un procédé d'élaboration de résines de type époxy, notamment de résines thermodurcissables époxy ou vinyl esters obtenues à partir de composés phénoliques naturels.

Selon un premier aspect, l'invention a pour objet un procédé de préparation de résines de type époxy à partir d'un mélange de composés phénoliques époxydés, où lesdits composés phénoliques époxydés sont obtenus par une époxydation de composés phénoliques naturels choisis parmi le groupe consistant en coumarine, naphtoquinone, flavonoïde, isoflavonoïde, anthocyane, tanin condensé et tanin hydrolysable (les tanins sont généralement utilisés sous forme dépolymérisée).

Ces composés peuvent être utilisés en mélange et c'est typiquement le cas lorsqu'on emploie des composés naturels, issus de la biomasse végétale.

Cette étape d'époxydation conduit à des composés phénoliques époxydés employés pour la préparation de résines. En d'autres termes, le procédé selon l'invention met en oeuvre des composés phénoliques époxydés qui sont issus de l'époxydation de composés phénoliques naturels.

Selon une première variante, la résine préparée est une résine thermodurcissable époxy et est préparée par formulation dudit mélange de composés phénoliques époxydés avec au moins un durcisseur portant des fonctions amine libre ou anhydride d'acide, ce par quoi on obtient la résine thermodurcissable époxy.

Selon une deuxième variante, la résine préparée est une résine vinyl ester et est préparée selon un procédé comprenant également les étapes ultérieures suivantes :
- une étape de réaction du mélange de composés phénoliques époxydés avec de l'acide acrylique ou méthacrylique, ce par quoi on obtient un macromonomère acrylate ou méthacrylate,
- une étape de copolymérisation dudit macromonomère acrylate ou méthacrylate avec des monomères vinyliques, de préférence par polymérisation radicalaire,
ce par quoi on obtient la résine vinyl ester.

Les prépolymères époxy sont mis en réaction avec de l'acide acrylique, méthacrylique ou un dérivé afin de synthétiser un macromonomère acrylate ou méthacrylate. La réaction est conduite en faisant réagir des composés phénoliques naturels époxydés avec de l'acide acrylique ou méthacrylique, préférentiellement de l'acide acrylique. Cette réaction est conduite en solvant et permet d'isoler un macromonomère acrylate ou méthacrylate. Ce macromonomère entre alors en réaction avec un diluant réactif, solvant polymérisable constitué de composés vinyliques, préférentiellement styrène ou vinyl toluène.

Les composés phénoliques époxydés employés à titre de réactifs dans le procédé de l'invention sont issus de composés phénoliques naturels, qui sont généralement subdivisés en phénols simples, acides-phénols (dérivés de l'acide benzoïque ou cinnamique) et coumarines, en naphtoquinones, en stilbénoïdes (deux cycles C6 liés par 2C), en flavonoïdes, isoflavonoïdes et anthocyanes (structure C6-C3-C6) et en formes polymérisées : tanins condensés et tanins hydrolysables. Ces squelettes carbonés de bases sont issus du métabolisme secondaire des plantes, élaborés par la voie du shikimate. Ce sont des molécules qui contiennent au moins un cycle benzénique et des groupes hydroxyles.

Typiquement, ces groupes hydroxyles sont situés sur les noyaux benzéniques, constituant ainsi des fonctions phénols. Les composés phénoliques naturels sont aussi désignés « polyphénols ».

Les composés phénoliques naturels utilisés selon l'invention présentent l'avantage de comprendre des fonctions hydroxy à des positions variées, ce qui permet d'obtenir des composés époxydés à fonctionnalité variable (en nombre et en position). Cette variation du taux d'époxydation permet de contrôler la fonctionnalité et donc la réactivité, et par voie de conséquence le temps de réticulation et ainsi, les propriétés mécaniques finales du matériau après durcissement.

Les réactifs mis en oeuvre dans le procédé de l'invention sont généralement exempts d'autres composés phénoliques naturels que ceux précités. En particulier, ils sont de préférence exempts de lignines et lignanes.

Des exemples de composés phénoliques naturels utilisables sont reportés dans le tableau suivant, qui indique également une origine possible pour chaque classe de composés.

**COMPOSES PHENOLIQUES**

| Squelette carboné | Classe | Exemple | Formule | Origine |
|---|---|---|---|---|
| C6 | Phénols simples | Hydroquinone | 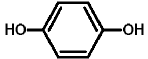 | Busserole |
| C6 | Phénols simples | Résorcinol | 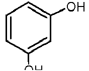 | Bois |
| C6 | Phénols simples | Phloroglucinol | 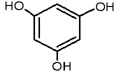 | Algues brunes |
| C6-C1 | Acides hydroxybenzoïques | Acide p-hydroxybenzoïque | 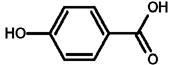 | Epices, fraises |
| C6-C1 | Acides hydroxybenzoïques | Acide gallique | 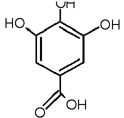 | Raisin |
| C6-C3 | Acides hydroxycinnamiques | Acide p-coumarique | 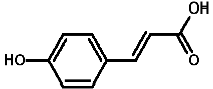 | Tomates, aïl |
| | Coumarines | Ombelliférone | 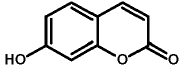 | Carottes, coriandre |
| C6-C4 | Naphtoquinones | Juglone | 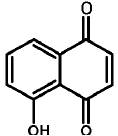 | Noix |
| C6-C2-C6 | Stilbénoïdes | trans-Resvératrol | 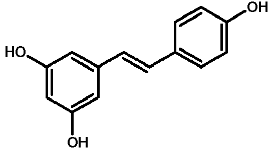 | Raisin |
| | Flavonoïdes | Kaempférol | 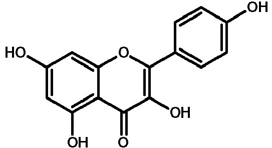 | Fraises |
| C6-C3-C6 | Isoflavonoïdes | Daidzéine | 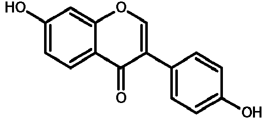 | Graines de soja |
| | Anthocyanes | Delphinidol | 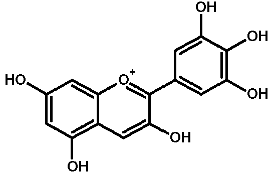 | Raisin Cabernet-Sauvignon |
| (C6-C3-C6)ₙ | Tanins condensés | Procyanidine | 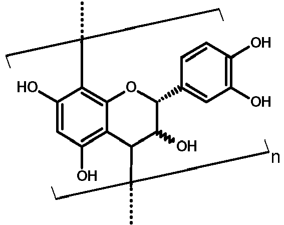 | Pommes |
| | Tanins hydrolysables | Gallotanins | 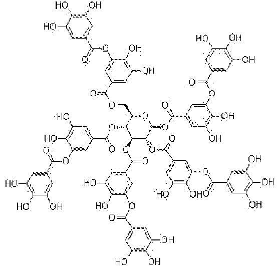 | Chêne |

Ce tableau s'inspire de Macheix et als. dans Sarni-Manchado et Cheynier (2006)ⁱⁱ, ainsi que de Bruneton (1999)ⁱⁱⁱ mais n'est pas exhaustif et n'est pas limitatif des phénols utilisables.
ⁱⁱ P. Sarni-Manchado, V. Cheynier, Les polyphénols en agroalimentaire, Lavoisier, Editions Tec & Doc, 2006, p398
ⁱⁱⁱ Jean Bruneton, Pharmacognosie - Phytochimie, Plantes médicinales, Editions Tec & Doc, Editions médicales internationnales, 1999, p1120

Selon un mode de réalisation préféré de l'invention, les composés phénoliques naturels sont de type flavonoïde, tanin condensé ou tanin hydrolysable, et sont de préférence choisis parmi la catéchine (Schéma 13) et les dérivés de la catéchine. Avantageusement, les composés phénoliques naturels sont choisis parmi la catéchine, l'épicatéchine, la gallocatéchine, l'épigallocatéchine, la catéchine gallate, l'épicatéchine gallate, etc

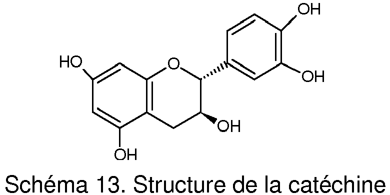

Selon un mode de réalisation préféré, lesdits composés phénoliques naturels sont extraits :
- du bois, ou de produits connexes issus de la sylviculture,
- des algues dulçaquicoles ou halophiles, ou
- de la vigne, du raisin, des fruits ou de produits connexes issus de la viticulture ou de la vinification.

Dans le cadre de la présente description, on entend par « flavonoïdes » une classe de composés organiques présentant un squelette de base à 15 atomes de carbone, fait de deux cycles en C6 reliés par une chaîne en C3. Les flavonoïdes regroupent notamment les flavones, les flavonols, les flavanols (aussi appelés catéchines).

Dans le cadre de la présente description, on entend par « tanins condensés » une classe de composés organiques issus de la polymérisation de flavonoïdes. Les tanins condensés sont également appelés « tanins catéchiques » ou « proanthocyanidines ». Dans le cadre de la présente description, on entend par « tanins hydrolysables » une classe de composés organiques issus de la polymérisation d'un sucre et d'acides-phénols.

Les formes polymérisées des composés phénoliques naturels sont dépolymérisées avant époxydation. En particulier, les tanins condensés (ou proanthocyanidines) sont dépolymérisés à chaud en milieu alcoolique en présence d'acide et d'un réactif nucléophile (^{iv, v, vi, vii, viii}**).** Ce réactif nucléophile réagit avec les unités supérieures et unités d'extension, qui ont été libérées sous forme de carbocations par rupture acido-catalysée des liaisons interflavaniques (Schéma 14). Le réactif nucléophile est un composé possédant une fonction thiol, soit un composé phénolique mono-aromatique. Ainsi, les unités constitutives des chaines polymériques se retrouvent, après réaction de dépolymérisation, soit sous formes de monomères libres lorsqu'elles étaient initialement en position terminale (extrémité inférieure), soit sous forme de monomères substitués (dérivés thioethers ou d'un composés phénolique) lorsqu'elles étaient initialement en position intermédiaire ou extrémité supérieure. 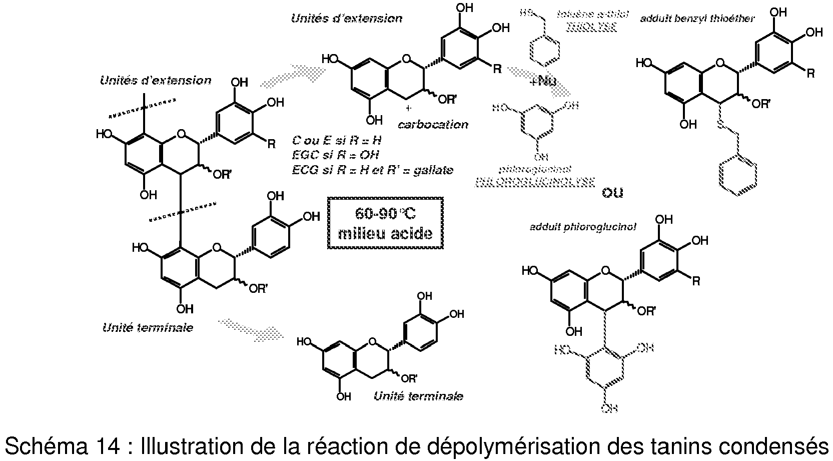 ^{iv} Kolodziej Phytochemistry ; 1990, 29, 1671-1674
^{v} Rigaud, J.; Perez-Ilzarbe, X.; RicardodaSilva, J. M.; Cheynier, V. Journal of Chromatography; 1991, 540, 401-405
^{vi} Guyot, S.; Marnet, N.; Laraba, D.; Sanoner, P.; Drilleau, J. F. Journal of Agricultural and Food Chemistry; 1998, 46, 1698-1705
^{vii} Kennedy, J.; Jones, G. P. Journal of Agricultural and Food Chemistry; 2001, 49, 1740-1746
^{viii} Torres, J.; Lozano, C. Chromatographia; 2001, 54, 523-526

Lorsque la dépolymérisation est réalisée avec un composé phénolique comme le résorcinol, des fonctions hydroxy supplémentaires sont introduites sur toutes les unités monomères substituées qui augmentent d'autant le degré d'époxydation.

Ainsi, selon un mode particulier, bien adapté notamment aux tanins condensés et aux tanins hydrolysables, le procédé selon l'invention comprend, préalablement à l'étape d'époxydation, une étape de dépolymérisation des composés phénoliques naturels lorsque ceux-ci sont présents sous forme polymérisée. Cette dépolymérisation est typiquement conduite en présence d'acide et de réactifs nucléophiles.

Selon ce mode, les formes polymérisées des composés phénoliques sont dépolymérisées avant époxydation. Le réactif nucléophile est généralement un composé possédant une fonction thiol (typiquement le toluène α-thiol, l'acide thioglycolique, la cystéine ou la cystéamine) ou encore un composé phénolique mono-aromatique (typiquement le phloroglucinol ou le résorcinol).

La réaction d'époxydation du procédé selon l'invention peut être avantageusement réalisée selon l'un ou l'autre des modes de réalisations suivants.

Selon un premier mode de réalisation, l'époxydation des composés phénoliques naturels est effectuée par époxydation par un oxirane substitué par au moins un atome de chlore ou de brome, de préférence par de l'épichlorhydrine.

L'époxydation est généralement conduite dans un solvant tel que l'éthanol, de préférence l'éthanol absolu. Cette époxydation est avantageusement réalisée en présence d'une base forte, typiquement de la soude. Le sel formé est généralement éliminé par filtration et l'oxirane résiduel peut être éliminé par évaporation.

Un avantage de ce mode est qu'il utilise pour l'époxydation des composés polyphénoliques de l'épichlorhydrine qui provient d'une ressource renouvelable, car elle est obtenue par chloration du glycérol co-produit de la transestérification des huiles végétales pour la préparation du bio-diesel.

Selon un second mode de réalisation, l'époxydation des composés phénoliques naturels est effectuée en alkylant les composés phénoliques naturels par un halogénure insaturé puis en oxydant les composés ainsi alkylés.

L'étape d'alkylation est typiquement conduite par catalyse par transfert de phase en phase aqueuse, méthanolique ou en mélange eau/méthanol dans des proportions variables. L'alkylation des composés phénoliques naturels est avantageusement réalisée en faisant réagir les composés phénoliques naturels avec un halogénure d'alcène, préférentiellement un halogénure d'allyle, et plus préférentiellement du bromure d'allyle. Le catalyseur de transfert de phase utilisé est de préférence un sel d'ammonium quaternaire, préférentiellement un sulfate de tétraalkylammonium et plus préférentiellement du tétrabutylammonium hydrogénosulfate.

L'alkylation est généralement suivie d'une oxydation des fonctions éthyléniques portées par les composés phénoliques naturels après alkylation. Cette oxydation est avantageusement conduite à l'aide de peroxydes tels que l'eau oxygénée ou par des acides peroxycarboxyliques, préférentiellement l'acide peroxyacétique, l'acide peroxybenzoïque, l'acide peroxytrifluoroacétique ou l'acide méta-chloroperbenzoïque. Cette oxydation peut également être réalisée de manière enzymatique.

La voie d'époxydation employée selon l'invention permet de fonctionnaliser des composés phénoliques naturels non purifiés après extraction, en outre les composés obtenus permettent d'élaborer sans autre post-traitement des résines thermodurcissables époxy.

L'invention concerne la formulation de ces composés phénoliques naturels époxydés avec des durcisseurs comportant des fonctions amine libre ou anhydride d'acide. La formulation des composés phénoliques naturels époxydés avec des durcisseurs amine conduit à l'élaboration de résines époxy-amine. La formulation des composés phénoliques naturels époxydés avec des durcisseurs portant des fonctions anhydride d'acide conduit à l'élaboration de résines époxy-anhydride.

Selon un deuxième aspect, l'invention a également pour objet les résines époxy du type obtenu dans le cadre du procédé défini précédemment.

En particulier, l'invention concerne également une résine époxy susceptible d'être obtenue selon le procédé de préparation susmentionné, à partir d'un mélange de composés phénoliques époxydés, eux-mêmes obtenus à partir d'un mélange de composés phénoliques naturels, bruts, et/ou dépolymérisés.

L'invention concerne également une résine thermodurcissable époxy susceptible d'être obtenue selon le procédé de préparation susmentionné.

Selon un mode de réalisation particulier de l'invention, la résine susmentionnée est une résine de type époxy-amine.

Selon un mode de réalisation particulier de l'invention, la résine susmentionnée est une résine de type époxy-anhydride d'acide.

Les durcisseurs de type amine et de type acide sont généralement du type de ceux précités.

L'invention concerne également une résine vinyl ester susceptible d'être obtenue selon le procédé de préparation susmentionné.

L'invention concerne également l'utilisation d'une résine thermodurcissable époxy ou d'une résine vinyl ester susceptible d'être obtenue par le procédé selon l'invention pour l'obtention de matériaux composites, pour l'isolation de composants électroniques et pour le revêtement de surfaces, notamment de surfaces métalliques.

### FIGURES

La Figure 1 présente les spectres IR de la catéchine naturelle et de la catéchine époxydée selon l'Exemple 1.
La Figure 2 présente les spectres ESI-TOF de la catéchine naturelle et de la catéchine époxydée selon l'Exemple 1.
La Figure 3 présente le spectre ¹H-RMN de la catéchine naturelle.
La Figure 4 présente le spectre ¹H-RMN de la catéchine époxydée selon l'Exemple 1.
La Figure 5 présente les spectres Dosy ¹H de la catéchine naturelle et de la catéchine époxydée selon l'Exemple 1.
La Figure 6 présente les profils de perte de masse par analyse thermogravimétrique (ATG) des résines obtenues selon l'Exemple 6.
La Figure 7 présente les thermogrammes par analyse calorimétrique différentielle à balayage (DSC) des résines obtenues selon l'Exemple 6.

L'invention sera encore davantage illustrée au vu des exemples décrits ci-après.

### EXEMPLES

Les exemples suivant servent à illustrer l'invention sans aucunement en limiter la portée.

### Exemple 1

### Synthèse d'une catéchine époxydée par époxydation de la catéchine avec de l'épichlorhydrine (Schéma 15)

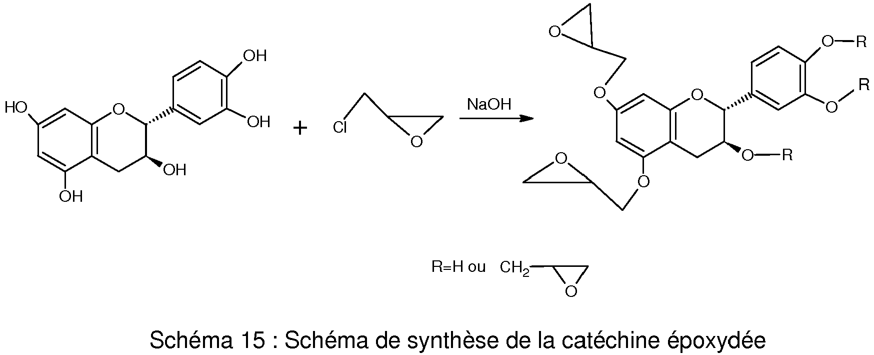

La catéchine est pesée (0,5 g, 1,72.10⁻³ mol, Sigma C1251-10G), solubilisée dans l'éthanol (3 mL) et introduite dans un ballon bicol de 50 mL. L'épichlorohydrine (2,7 mL, 3,44.10⁻² mol, Aldrich 240699-100 mL) est introduite dans le ballon placé sous agitation magnétique quelques minutes à 98°C. Le mélange réactionnel est mis à reflux et une solution alcoolique de soude (0,70 g, 1,75.10⁻² mol) dans l'éthanol (6,5 mL) est ajoutée au goutte à goutte. Le milieu réactionnel est ensuite laissé à reflux. Après 3 heures de réaction, le milieu réactionnel est dilué dans l'acétone (100 mL) et filtré sur un filtre en microfibres de verre (1 µm) pour éliminer NaCl formé. Le filtrat est alors concentré à l'évaporateur rotatif sous vide pour éliminer l'épichlorohydrine résiduelle. Le produit est sous forme d'une huile qui est dissoute dans l'acétone (15 mL), de nouveau filtrée et concentrée à l'évaporateur rotatif sous vide. L'opération de dissolution-filtration-évaporation est alors répétée une dernière fois.

### Exemple 2

### Synthèse d'une catéchine époxydée par époxydation de la catéchine par alkylation/oxydation

La catéchine est pesée (0,5 g, 1,72.10⁻³ mol, Sigma C1251-10G), solubilisée dans le THF (3 mL) et introduite dans un ballon bicol de 50 mL. Le bromure d'allyle est pesé (0,2 g, 1,72.10⁻³ mol) et introduit dans le ballon placé sous agitation magnétique. Le catalyseur tétrabutyl ammonium hydrogénosulfate est pesé (0,1% w/w) et introduit dans le ballon. Le mélange réactionnel est porté à reflux pendant une heure. Le milieu réactionnel est ensuite refroidi. On obtient par extraction la catéchine allyl éther. Le produit de la réaction est alors solubilisé et introduit dans un ballon tricol surmonté d'un réfrigérant et équipé d'une agitation magnétique. On ajoute 0,1% w/w de chlorure de tricapryl méthyl ammonium, 40 ml d'eau distillée, 0,1% w/w de Na₂WO₄.2H₂O et 0,1% w/w de H₃PO₄ et 10 g d'H₂O₂ à 20 volumes. Le mélange réactionnel est porté à 70°C pendant 45 min puis refroidi. On obtient la catéchine tétraépoxydée.

### Exemple 3

### Synthèse de composés phénoliques naturels époxydés par époxydation à l'épichlorhydrine

Les synthèses suivantes ont été réalisées dans les mêmes conditions que celles décrites dans l'Exemple 1. Les quantités de réactifs utilisées pour les différentes synthèses sont résumées dans le Tableau 2.
- Synthèse d'une épicatéchine époxydée par époxydation de l'épicatéchine
- Synthèse d'une gallocatéchine époxydée par époxydation de la gallocatéchine (Schéma 16)
- Synthèse d'une épigallocatéchine époxydée par époxydation de l'épigallocatéchine
- Synthèse d'une catéchine gallate époxydée par époxydation de la catéchine gallate
- Synthèse d'une épicatéchine gallate époxydée par époxydation de l'épicatéchine gallate

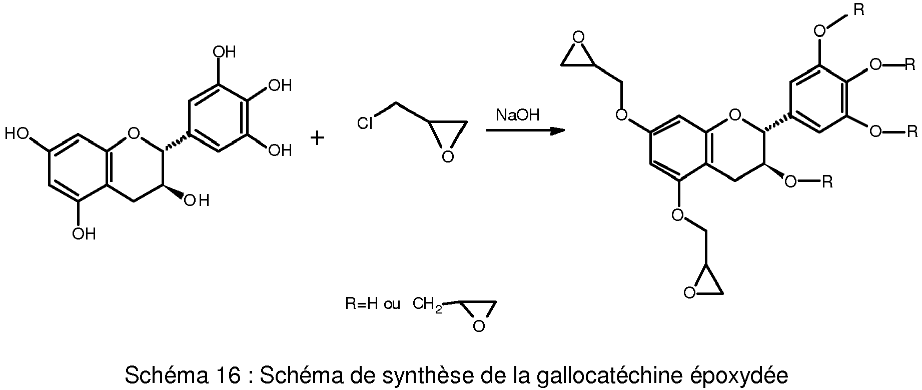

**Tableau 2 : Quantités de matières pour les synthèses des molécules modèles époxydées**

| Polyphénol | Quantité | Epichlorohydrine | Soude |
|---|---|---|---|
| Epicatéchine | 0,5 g, 1,72.10⁻³ mol | 2,7 mL, 3,44.10⁻² mol | 0,70 g, 1,75.10⁻² mol |
| Gallocatéchine | 0,5 g, 1,63.10⁻³ mol | 3,1 mL, 3,92.10⁻² mol | 0,78 g, 1,96.10⁻² mol |
| Epigallocatéchine | 0,5 g, 1,63.10⁻³ mol | 3,1 mL, 3,92.10⁻² mol | 0,78 g, 1,96.10⁻² mol |
| Catéchine gallate | 0,5 g, 1,13.10⁻³ mol | 2,5 mL, 3,16.10⁻² mol | 0,63 g, 1,58.10⁻² mol |
| Epicatéchine gallate | 0,5 g, 1,13.10⁻³ mol | 2,5 mL, 3,16.10⁻² mol | 0,63 g, 1,58.10⁻² mol |

### Exemple 4

### Caractérisation des molécules époxydées

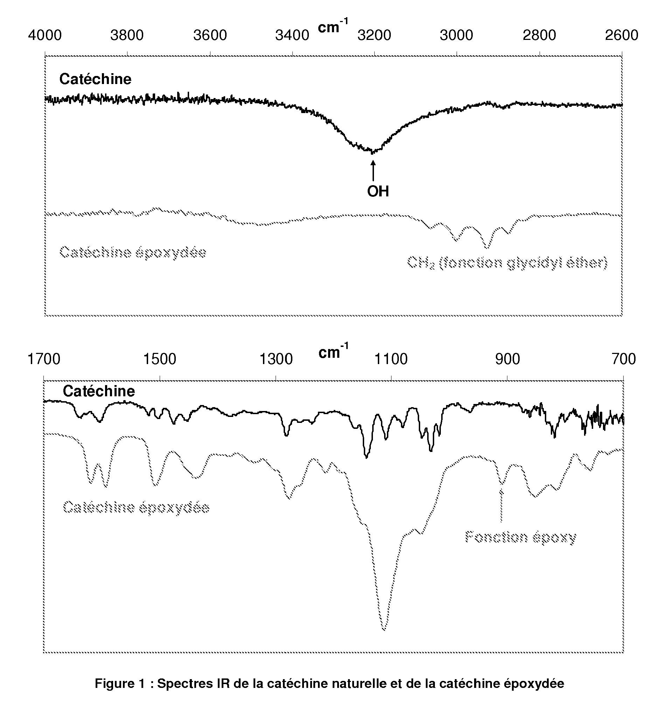

### Par Infra-Rouge : Figure 1

La bande centrée sur 3200 cm⁻¹ caractéristique des fonctions -OH de la catéchine naturelle disparaît sur le spectre de la catéchine époxydée. Dans cette zone, l'apparition de pics correspondant aux CH₂ présents dans les fonctions glycidyl éther montre l'époxydation de la catéchine.

De plus, sur le spectre de la catéchine époxydée, on voit l'apparition d'un pic vers 900 cm⁻¹ caractéristique des fonctions époxyde.

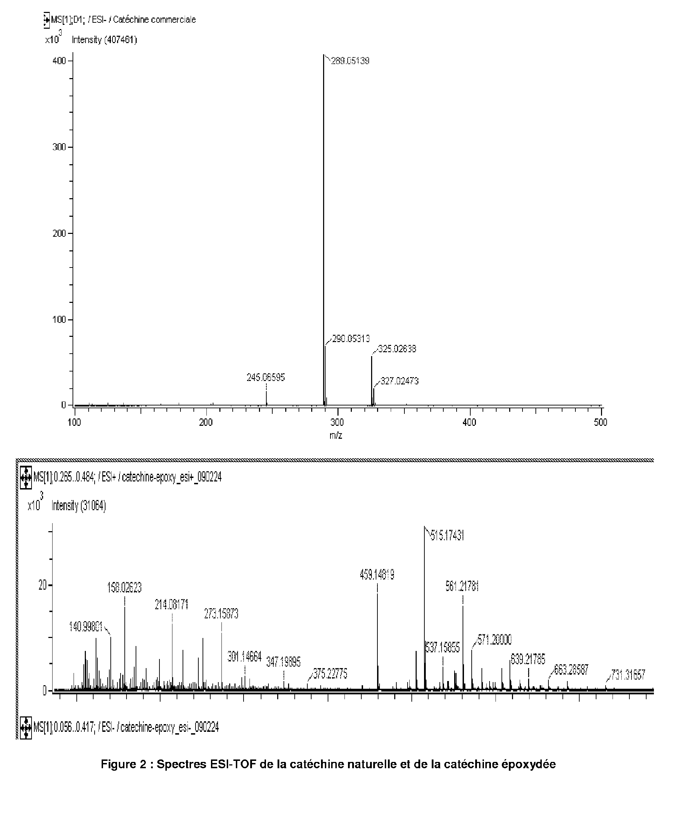

### Par ESI-TOF : Figure 2

Le spectre de la catéchine naturelle comprend majoritairement le pic correspondant à la catéchine à 290g/mol.
Sur le spectre de la catéchine époxydée, on retrouve de nombreux pics correspondant à des molécules de catéchine portant une, trois, quatre ou cinq fonctions glycidyl éther :
- 347 g/mol : Catéchine époxydée avec une fonction glycidyl éther
- 459 g/mol : Catéchine époxydée avec trois fonctions glycidyl éther
- 515 g/mol : Catéchine époxydée avec quatre fonctions glycidyl éther + adduit sodium à 537 g/mol (514+23)
- 571 g/mol : Catéchine époxydée avec cinq fonctions glycidyl éther

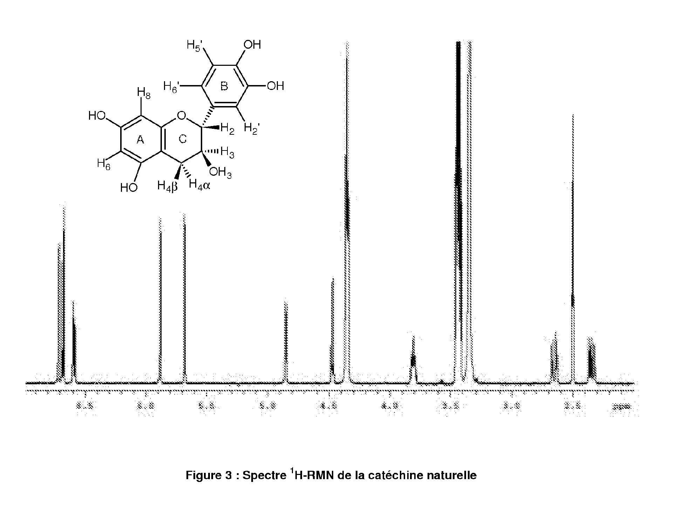

### Par RMN : Figure 3, 4 et 5

Le spectre ¹H-RMN de la catéchine naturelle est présenté sur la Figure 3.
L'attribution des différents signaux a été réalisée à l'aide des spectres HMBC et HSQC (non présentés ici).
*RMN ¹H (DMSO) de la catéchine :* δ = 2,35 ppm (1 H, CH_{4βC}), 2,65 ppm (1 H, CH_{4αC}), 3,81 ppm (1 H, CH_{3C}), 4,47 ppm (1 H, CH_{2C}), 4,85 (1 H, OH_{3C}), 5,68 ppm (1 H, CH_{8A}), 5,88 ppm (1 H, CH_{6A}), 6,59 ppm (1 H, CH_{6'B}), 6,70 ppm (2H, CH_{2'B} , CH_{5'B}).

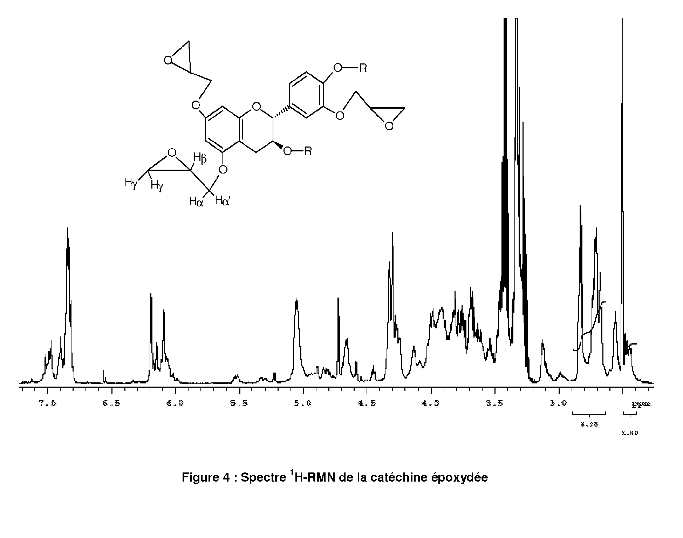

Le spectre ¹H-RMN de la catéchine époxydée est présenté sur la Figure 4.
L'attribution des différents signaux a été réalisée à l'aide des spectres HMBC et HSQC (non présentés ici). Le nombre moyen de fonctions époxyde présentes sur la molécule de catéchine époxydée a été déterminé par l'intégration des signaux entre 2,6 et 2, 9 ppm correspondant aux protons γ et γ' des fonctions époxyde et des proton H_{4αC} et l'intégration du signal à 2,45 ppm correspondant aux protons H_{4βC}. Le calcul donne 3,5 fonctions époxyde en moyenne par molécule de catéchine époxydée.

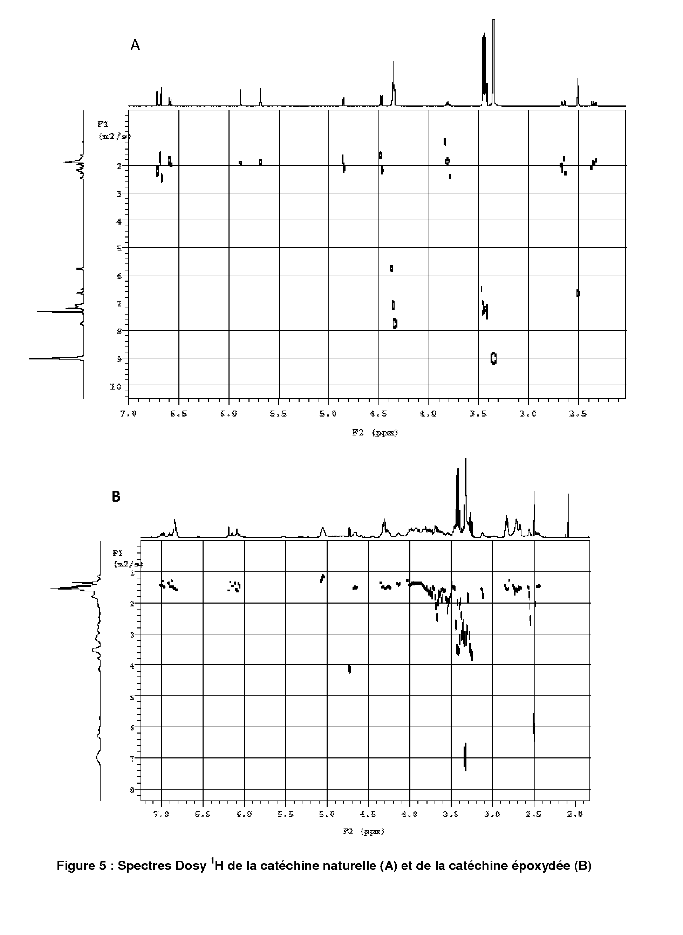

Les spectres Dosy ¹H de la catéchine naturelle et de la catéchine époxydée sont présentés sur la Figure 5.
La catéchine a un coefficient de diffusion autour de 2 m²/s. La catéchine époxydée a un coefficient de diffusion légèrement plus faible (entre 1,5 et 2 m²/s) ce qui appuie la différence de masse molaire et donc l'époxydation de la catéchine. De plus, sur le spectre B, on ne voit pas distinctement 2 ni plusieurs populations de molécules correspondant à la catéchine époxydée de coefficients de diffusion distincts ce qui montre que l'on a une distribution de molécules avec un nombre de fonctions époxyde variable (3,4 ou 5) plutôt que des molécules époxydées polymérisées (dimères, trimères...).

### Exemple 5

### Synthèse d'un extrait de tanin époxydé par époxydation du tanin

Un extrait de pépins de raisins contenant 630,84 mg de tanin par gramme est pesé (3,15 g de tanin, 9,9.10⁻³ mol de tanin), solubilisé dans l'éthanol (10 mL) et introduit dans un ballon bicol de 100 mL. L'épichlorohydrine (15,5 mL, 19,8.10⁻² mol, Aldrich 240699-100 mL) est introduite dans le ballon placé sous agitation magnétique quelques minutes à 98°C. Le mélange réactionnel est mis à reflux et une solution alcoolique de soude (3,96 g, 9,8.10⁻² mol) dans l'éthanol (18,8 mL) est ajoutée au goutte à goutte. Le milieu réactionnel est ensuite laissé à reflux. Après 3 heures de réaction, le milieu réactionnel est dilué dans l'acétone (300 mL) et filtré sur un filtre en microfibres de verre (1 µm) pour éliminer NaCl formé. Le filtrat est alors concentré à l'évaporateur rotatif sous vide pour éliminer l'épichlorohydrine résiduelle. Le produit est sous forme d'une huile qui est dissoute dans l'acétone (100 mL), de nouveau filtrée et concentrée à l'évaporateur rotatif sous vide. L'opération de dissolution-filtration-évaporation est alors répétée une dernière fois.

### Exemple 6

### Elaboration d'une résine époxy à partir de catéchine époxydée et de durcisseur

Les résines sont formulées à température ambiante. Les produits résultant de l'époxydation de la catéchine sont cristallins, leur température de fusion déterminée par DSC se situe autour de 85°C. Il est donc nécessaire de diluer les produits dans un solvant (protocole 1) ou un autre produit époxydé de viscosité plus faible (protocole 2a) ou diluant réactif (protocole 2b) :
1) Dissoudre 1 g de catéchine époxydée dans 200 µL d'acétone. Dans un petit moule, mélanger 0,6 g de ce mélange avec 0,365 g d'Epamine PC 19 (PO.INT.ER s.r.l). La résine se forme après plusieurs heures à température ambiante.
2)
   a) Diluer 0,8 g de catéchine époxydée dans 1,2 g de résorcinol diglycidyl éther (Aldrich 470945-100ML) à 60°C pendant quelques minutes. Le mélange doit être légèrement visqueux à température ambiante. Dans un petit moule, mélanger 1 g de ce mélange avec 0,565 g d'Epamine PC 19 (PO.INT.ER s.r.l). La résine se forme après plusieurs heures à température ambiante.
   b) Diluer 0,5 g de catéchine époxydée dans 1,5 g de DGEBA (Epikote 828 Resolution Performance Products) à 60°C pendant quelques minutes. Le mélange doit être légèrement visqueux à température ambiante. Dans un petit moule, mélanger 1 g de ce mélange avec 0.598 g d'Epamine PC 19 (PO.INT.ER s.r.l). La résine se forme après plusieurs heures à température ambiante.

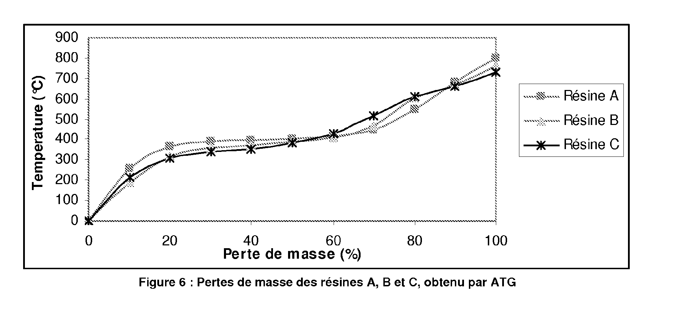

Les résines obtenues sont caractérisées par analyse thermogravimétrique (ATG) (Figure 6) et comparées avec une résine commerciale obtenue à partir de DGEBA (Epikote 828 Resolution Performance Products) (Résine A).
La résine B est une résine élaborée à partir de catéchine époxydée selon le procédé ii) en utilisant la DGEBA comme autre produit époxydé de viscosité plus faible (25% catéchine époxydée/75% DGEBA en masse).
La résine C est une résine élaborée à partir de catéchine époxydée selon le procédé ii) en utilisant le résorcinol diglycidyl éther comme autre produit époxydé de viscosité plus faible (40% catéchine époxydée/60% résorcinol diglycidyl éther en masse).

L'agent réticulant pour les 3 résines et une amine cycloaliphatique Epamine PC 19 (PO.INT.ER s.r.l).

Les profils de perte de masse obtenus par ATG des résines A, B et C sont semblables.

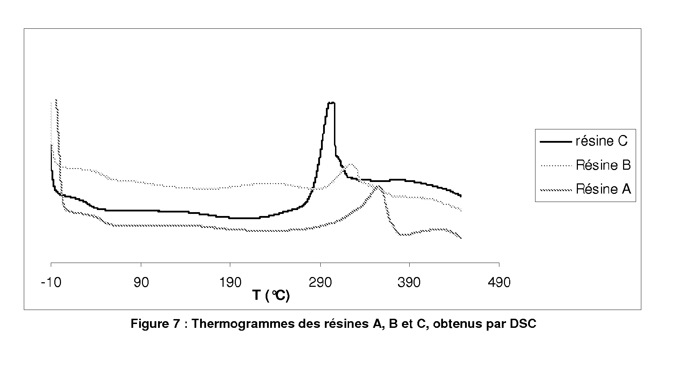

Les résines sont également caractérisées par analyse calorimétrique différentielle à balayage (DSC) (Figure 7). La composition des résines A, B et C est la même que ci-dessus.
Les thermogrammes DSC se composent d'une transition vitreuse (Tg entre 30 et 50°C) et d'un pic exothermique vers 300°-400°C qui correspond à la calcination des échantillons. En effet lorsque l'analyse DSC est arrêtée à 300°C, les échantillons sont jaunes ou marrons tandis que lorsque l'analyse est arrêtée à 500°C, les échantillons sont calcinés. Cette calcination autour de 300-400°C est également visible sur les thermogrammes obtenus par ATG par une perte de masse dans cette zone de 40 à 50%.
Les Tg de la résine commerciale (A) et de la résine commerciale contenant 25% de catéchine époxydée (B) sont les mêmes (Tg(A)=47°C et Tg(B)=48°C). La Tg de la résine C est de 32°C.
Par contre la calcination se produit à plus faible température pour les résines B et C que pour la résine A.

### Exemple 7

### Elaboration d'une résine époxy à partir de tanin époxydé et de durcisseur

Les résines sont formulées à température ambiante. Les produits résultant de l'époxydation de tanins sont cristallins, leur température de fusion déterminée par DSC se situe autour de 130°C. Il est donc nécessaire de diluer les produits dans un solvant (protocole 1) ou un produit époxydé de viscosité plus faible (protocole 2a) ou diluant réactif (protocole 2b).
1) Dissoudre 1 g de tanin époxydé dans 200 µL d'acétone. Dans un petit moule, mélanger 0,6 g de ce mélange avec 0,312 g d'Epamine PC 19 (PO.INT.ER s.r.l). La résine se forme après plusieurs heures à température ambiante.
2)
   a) Diluer 0,8 g de tanin époxydé dans 1,2 g de résorcinol diglycidyl éther (Aldrich 470945-100 mL) à 60°C pendant quelques minutes. Le mélange doit être légèrement visqueux à température ambiante. Dans un petit moule, mélanger 1 g de ce mélange avec 0,651 g d'Epamine PC 19 (PO.INT.ER s.r.l). La résine se forme après plusieurs heures à température ambiante.
   b) Diluer 0,5 g de tanin époxydé dans 1,5 g de DGEBA (Epikote 828 Resolution Performance Products) à 60°C pendant quelques minutes. Le mélange doit être légèrement visqueux à température ambiante. Dans un petit moule, mélanger 1 g de ce mélange avec 0,546 g d'Epamine PC 19 (PO.INT.ER s.r.l). La résine se forme après plusieurs heures à température ambiante.

## Revendications

1. Procédé de préparation de résines époxy à partir d'un mélange de composés phénoliques époxydés, où lesdits composés phénoliques époxydés sont obtenus par une époxydation de composés phénoliques naturels choisis parmi le groupe consistant en coumarine, naphtoquinone, flavonoïde, isoflavonoïde, anthocyane, tanin condensé et tanin hydrolysable.

2. Procédé selon la revendication 1, pour la préparation d'une résine thermodurcissable époxy, où la résine est préparée par formulation dudit mélange de composés phénoliques époxydés avec au moins un durcisseur portant des fonctions amine ou anhydride d'acide, ce par quoi on obtient la résine thermodurcissable époxy.

3. Procédé selon la revendication 1, pour la préparation d'une résine vinyl ester, comprenant ultérieurement à l'étape d'époxydation :
- une étape de réaction dudit mélange de composés phénoliques époxydés avec de l'acide acrylique ou méthacrylique, ce par quoi on obtient un macromonomère acrylate ou méthacrylate, puis
- une étape de copolymérisation dudit macromonomère acrylate ou méthacrylate avec des monomères vinyliques, de préférence par polymérisation radicalaire,
ce par quoi on obtient la résine vinyl ester.

4. Procédé selon l'une quelconque des revendications 1 à 3, où l'époxydation des composés phénoliques naturels est effectuée en présence d'un oxirane substitué par au moins un atome de chlore ou de brome, de préférence par de l'épichlorhydrine.

5. Procédé selon l'une quelconque des revendications 1 à 3, où l'époxydation est effectuée en alkylant les composés phénoliques naturels par un halogénure insaturé, puis en oxydant les composés ainsi alkylés.

6. Procédé selon l'une quelconque des revendications 1 à 5, où les composés phénoliques naturels employés pour la synthèse de composés phénoliques époxydés sont de type flavonoïde, tanin condensé ou tanin hydrolysable, et sont de préférence choisis parmi la catéchine et ses dérivés.

7. Procédé selon l'une quelconque des revendications 1 à 6, où lesdits composés phénoliques naturels sont extraits :
- du bois, ou de produits connexes issus de la sylviculture,
- des algues dulçaquicoles ou halophiles, ou
- de la vigne, du raisin, des fruits ou de produits connexes issus de la viticulture ou de la vinification.

8. Procédé selon l'une quelconque des revendications 1 à 7, où les composés phénoliques naturels sont des tanins condensés ou des tanins hydrolysables, ledit procédé comprenant préalablement à l'étape d'époxydation, une étape de dépolymérisation desdits composés phénoliques naturels en présence d'acide et de réactifs nucléophiles.

9. Résine de type époxy susceptible d'être obtenue par le procédé selon l'une quelconque des revendications 1 à 8.

10. Résine thermodurcissable époxy susceptible d'être obtenue selon le procédé de la revendication 2.

11. Résine thermodurcissable époxy selon la revendication 10, **caractérisée en ce qu'**elle est une résine de type époxy-amine.

12. Résine thermodurcissable époxy selon la revendication 10, **caractérisée en ce qu'**elle est une résine de type époxy-anhydride d'acide.

13. Résine vinyl ester susceptible d'être obtenue selon le procédé de la revendication 3.

14. Utilisation d'une résine thermodurcissable susceptible d'être obtenue par le procédé selon l'une quelconque des revendications 1 à 8, pour l'obtention de matériaux composites, pour l'isolation de composants électroniques et pour le revêtement de surfaces, notamment de surfaces métalliques.

## Patentansprüche

1. Verfahren zur Herstellung von Epoxidharzen aus einer Mischung von epoxidierten Phenolverbindungen, wobei die epoxidierten Phenolverbindungen durch eine Epoxidation von natürlichen Phenolverbindungen erhalten werden, ausgewählt aus der Gruppe bestehend aus Cumarin, Naphthochinon, Flavonoid, Isoflavonoid, Anthocyane, kondensiertem Tannin und hydrolysierbarem Tannin.

2. Verfahren nach Anspruch 1 zur Herstellung eines wärmehärtenden Epoxidharzes, wobei das Harz durch Formulieren der Mischung von epoxidierten Phenolverbindungen mit mindestens einem Härter hergestellt wird, welcher Amin- oder Säureanhydridfunktionen trägt, wobei das wärmehärtende Epoxidharz erhalten wird.

3. Verfahren nach Anspruch 1 zur Herstellung eines Vinylesterharzes, aufweisend nach dem Epoxidationsschritt:
- einen Schritt des Umsetzen der Mischung von epoxidierten Phenolverbindungen mit Acryl- oder Methacrylsäure, wobei ein Acryl- oder Methacryl-Makromonomer erhalten wird, dann
- einen Schritt des Copolymerisierens des Acryl- oder Methacryl-Makromonomers mit Vinyl-Monomeren, vorzugsweise durch radikalische Polymerisation,
wobei das Vinylesterharz erhalten wird.

4. Verfahren nach einem der Ansprüche 1 bis 3, wobei die Epoxidation der natürlichen Phenolverbindungen in Gegenwart eines Oxirans durchgeführt wird, welches mit mindestens einem Chlor- oder Brom-Atom, vorzugsweise mit Epichlorhydrin substituiert ist.

5. Verfahren nach einem der Ansprüche 1 bis 3, wobei die Epoxidation durch Alkylierung der natürlichen Phenolverbindungen mit einem ungesättigten Halogen, dann durch Oxidation der so alkylierten Verbindungen durchgeführt wird.

6. Verfahren nach einem der Ansprüche 1 bis 5, wobei die für die Synthese der epoxidierten Phenolverbindungen verwendeten natürlichen Phenolverbindungen des Flavonoid-, kondensierten oder hydrolysierbaren Tannin-Typs sind, und vorzugsweise aus Catechin und Derivaten davon ausgewählt sind.

7. Verfahren nach einem der Ansprüche 1 bis 6, wobei die natürlichen Phenolverbindungen extrahiert werden aus:
- Holz, oder verwandten Produkten aus der Forstwirtschaft,
- Süßwasser- oder halophilen Algen, oder
- Weinrebe, Traube, Obst oder verwandten Produkten aus dem Weinbau und der Weinherstellung.

8. Verfahren nach einem der Ansprüche 1 bis 7, wobei die natürlichen Phenolverbindungen kondensierte Tannine oder hydrolysierbare Tannine sind, wobei das Verfahren vor dem Epoxidationsschritt einen Schritt des Depolymerisierens der natürlichen Phenolverbindungen in Gegenwart von Säure und nukleophilen Reagenzien aufweist.

9. Harz des Epoxidtyps, welches durch das Verfahren nach einem der Ansprüche 1 bis 8 erhalten werden kann.

10. Wärmehärtendes Epoxidharz, welches durch das Verfahren nach Anspruch 2 erhalten werden kann.

11. Wärmehärtendes Epoxidharz nach Anspruch 10, **dadurch gekennzeichnet, dass** es ein Harz des Epoxidamin-Typs ist.

12. Wärmehärtendes Epoxidharz nach Anspruch 10, **dadurch gekennzeichnet, dass** es ein Harz des Epoxidsäureanhydrid-Typs ist.

13. Vinylesterharz, welches durch das Verfahren nach Anspruch 3 erhalten werden kann.

14. Verwendung eines wärmehärtenden Harzes, welches durch das Verfahren nach einem der Ansprüche 1 bis 8 erhalten werden kann, zur Herstellung von Verbundmaterialien für die Isolierung von elektronischen Komponenten und für die Beschichtung von Oberflächen, insbesondere metallischen Oberfläche.

## Claims

1. A method for preparing epoxy resins from a mixture of epoxidized phenolic compounds, wherein said epoxidized phenolic compounds are obtained by epoxidation of natural phenolic compounds selected from the group consisting of coumarin, naphthoquinone, flavonoid, isoflavonoid, anthocyanin, condensed tannin and hydrolyzable tannin.

2. The method according to claim 1, for preparing an epoxy thermosetting resin, wherein the resin is prepared by formulating said mixture of epoxidized phenolic compounds with at least one hardener bearing amine or acid anhydride functions, whereby the epoxy thermosetting resin is obtained.

3. The method according to claim 1, for preparing a vinyl ester resin, comprising subsequently to the epoxidation step:
- a step for reacting said mixture of epoxidized phenolic compounds with acrylic or methacrylic acid, whereby an acrylate or methacrylate macromonomer is obtained, and then
- a step for copolymerization of said acrylate or methacrylate macromonomer with vinyl monomers, preferably by radical polymerization,
whereby the vinyl ester resin is obtained.

4. The method according to any of claims 1 to 3, wherein epoxidation of the natural phenolic compounds is carried out in the presence of an oxirane substituted with at least one chlorine or bromine atom, preferably with epichlorohydrin.

5. The method according to any of claims 1 to 3, wherein epoxidation is carried out by alkylating the natural phenolic compounds with an unsaturated halide, and then by oxidizing the thereby alkylated compounds.

6. The method according to any of claims 1 to 5, wherein the natural phenolic compounds used for the synthesis of epoxidized phenolic compounds are of the flavonoid, condensed tannin or hydrolyzable tannin type and are preferably selected from catechin and its derivatives.

7. The method according to any of claims 1 to 6, wherein said natural phenolic compounds are extracted:
- from wood, or related products from forestry,
- from freshwater or halophilic algae, or
- from vine, grape, fruit or related products from wine growing or wine making.

8. The method according to any of claims 1 to 7, wherein the natural phenolic compounds are condensed tannins or hydrolyzable tannins, said method comprising prior to the epoxidation step, a step for depolymerization of said natural phenolic compounds in the presence of acid and of nucleophilic reagents.

9. A resin of the epoxy type which may be obtained by the method according to any of claims 1 to 8.

10. An epoxy thermosetting resin which may be obtained according to the method of claim 2.

11. The epoxy thermosetting resin according to claim 10, **characterized in that** it is a resin of the epoxy-amine type.

12. The epoxy thermosetting resin according to claim 10, **characterized in that** it is a resin of the epoxy-acid anhydride type.

13. A vinyl ester resin which may be obtained according to the method of claim 3.

14. The use of a thermosetting resin which may be obtained by the method according to any of claims 1 to 8, for obtaining composite materials, for isolation of electronic components and for coating of surfaces, notably of metal surfaces.
